# EUROPEAN PATENT APPLICATION

(11) **EP 0 677 419 A1**
(43) Date of publication of application: **18.10.1995**
(21) Application number: 95105414.7
(22) Date of filing: 11.04.1995
(51) Int. Cl.: B60M 5/00, H01R 4/50

(54) **Electrical connector**

(30) Priority: 12.04.1994 FR 9404748
(71) Applicant: ERICO INTERNATIONAL CORPORATION, Solon Ohio 44139 (US)
(72) Inventor: Fuchs, Jean Claude, F-42580 L. Etrat (FR)
(74) Representative: Türk, Gille, Hrabal, Leifert

(57) **Abstract**

An electrical connector is disclosed with an expanding dowel pin for fastening onto a metal support. The electrical connector includes a dowel pin body (A) of stepped tubular shape, which may be inserted in the bore of the rail and bear against the rail at the shoulder of the step. A threaded stud (B) including a taper (7) interacts with the bore (11) of the dowel pin body locally to expand the dowel pin body radially in the bore (3) of the rail (2). A nut (9) on the threaded end of the stud (B) axially draws the stud to achieve such expansion when tightened. A conductor (10) is joined to the dowel pin by overmolding (12) of a metal alloy which is preferably melted and cast in the factory, enveloping the end of the conductor and part of the dowel pin body and yet spaced some distance from the end bearing faces of the dowel pin body.

## Description

### DISCLOSURE

The invention relates to an electrical connector and more particularly to a connector with an expanding dowel pin for fastening onto a metal support, such as a railroad track rail.

### BACKGROUND OF THE INVENTION

In order to provide electrical connection between two rails butted together, and likewise to provide electrical connection between a rail and other apparatus, it is known to join them electrically using a conductor formed of a braid or multi-strand cable made of copper or aluminum, which may be rigid or flexible, and with or without a jacket. The ends of the conductor are usually fastened to the webs of the rails, on either side of the joint.

This connection between the copper or the aluminum of the conductor and the steel of the rails has, for a long time, been effected by melting or welding, taking numerous precautions so that the melting temperature of the joining alloy does not adversely affect the steel of the rail and yet is sufficient to ensure good adhesion and good electrical conduction.

Many known techniques employ an aluminothermal welding procedure which melts down a mixture of metal oxides deposited in a graphite crucible communicating with or containing the end of the conductor placed on the base of the rail.

Other techniques such as described by FR-A-560 243 and EP-A-575,259, employ a mechanical connection using a connector which is joined to the rail by an expanding dowel pin engaged in a bore drilled transversely into the web of the rail. The disclosed dowel pin connections include: a dowel pin body of tubular shape, able to be inserted in the bore of the rail; a stud including a taper interacting with the bore of the dowel pin body in order, at least locally, to expand the dowel pin radially in the bore of the rail; a nut which when screwed onto the threaded part of the stud expands the body of the dowel pin by bearing against one face of the dowel pin body or of the rail; and a member which joins the conductor to one of the dowel pin or stud.

In FR-A-560,243, the dowel pin body has a split or slotted part forming flexible fingers extending into the rail bore and a part of larger size which bears against the web of the rail, and which forms a terminal or lug for joining to the conductor. Inserting a tapered axial body expands the fingers against the bore. With this device, the electrical connection between the conductor and the rail depends on two mechanical contacts, respectively one between the conductor and the terminal, and the other between the fingers and the bore of the rail.

Practical experience shows that this type of mechanical contact is very sensitive to the action of rain and adverse weather conditions, both as regards electrical conductance and as regards mechanical jamming.

In EP-A-575,259, the dowel pin body, which is cylindrical and not split or slotted, is integral with a collar. The collar is used for a bearing and the electrical contact of a terminal fastened mechanically to the conductor, which is pressed against it by a nut which is screwed onto a threaded tapered axial body. In this type of connector, in order to expand the dowel pin body in the bore of the rail, without the risk of the nut crushing the terminal, it is first of all necessary to put the dowel pin in place, temporarily equipping the threaded rod of the axial body with tooling designed to interact with a bearing element and with a pulling element of a hydraulic pulling tool. After the dowel pin has been expanded onto the rail, the hydraulic tool is removed and the terminal is crimped onto the conductor using another tool. Finally, the terminal, a washer and a nut are fitted, in succession, onto the threaded part of the axial body. Final tightening is effected using a torque wrench, in order to obtain a given tightening torque which ensures the desired contact between the various parts.

Independently of the numerous items of tooling, tools, and operations necessary to produce the electrical connection, this type of fastening exhibits the drawback of employing numerous components to provide the electrical connection, mechanically, between the conductor and the rail. The multiplicity of the mechanical and electrical contacts, namely a first contact between the conductor and the terminal, a second contact between the body and the sleeve body, and a third contact between the body and the rail, and also the rigidity of the conductor, may lead to poor electrical contacts during fitting and are sources of failure over time under the action of adverse weather conditions.

It therefor is desirable to provide a connector of the abovementioned type which overcomes these drawbacks, and in particular, is simple and quick to fit, while giving a reliable electrical connection having a long useful life.

### SUMMARY OF THE INVENTION

In the connector according to the present invention, the member for joining the conductor to the dowel pin body consists of a sleeve tube which is made of a metal alloy compatible with the constituent materials of the conductor and of the dowel pin body. The sleeve tube is overmolded onto the external part of the dowel pin body which has the largest diameter, enveloping both the insulation stripped end of the conductor and the dowel pin body, while remaining spaced from those faces of the body which bear, respectively, against the rail and against the nut.

By virtue of this arrangement, the electrical connection between the conductor and the dowel pin body is essentially ideal. It is possible, as soon as the connector has been put in place in the bore of the rail, to fasten and secure it by radial expansion. This expansion is obtained by means of a wrench acting on a nut screwed onto the rod of the axial stud and bearing on the body of the dowel pin. During this tightening, the axial stud is drawn inside the dowel pin body, and the nut bears exclusively on the body of the dowel pin, without affecting the overmolded sleeve tube. The tube is thus protected and cannot be detached from the body which carries it, either by a component of the tensile force, or by a reaction to this tightening force.

The fitting of the connector is considerably simplified by comparison with that of known dowel pin connectors. It can be installed in a shorter time, and is less expensive.

Furthermore, unlike connectors of the state of the art, the connection between the conductor and the rail has just one mechanical contact. That contact is between the wall of the bore of the rail and the reduced diameter part of the dowel pin body. This considerably reduces the risks of failure, especially since this region of the conductor is protected from or sealed against adverse weather conditions by the contact between the constituent materials of the rail and of the dowel pin body because of the expansion.

The overmolded sleeve tube is formed and secured to the projecting enlarged portion of the dowel pin body and the ends of the sleeve tube are slightly spaced from each end of the enlarged portion. This protects the sleeve from contact with the rail on one end and the nut or any hex head, or any tool used to obtain the radial expansion on the other end. The overmolding connecting the conductor and dowel pin body is preferably formed by an exothermic or aluminothermal cast welding process which not only forms the overmolded sleeve, but which also forms an excellent low impedance electrical connection between conductor and the dowel pin body.

In an embodiment of the invention, the overmolding secures and electrically joins an intermediate flexible conductor and a more rigid main conductor. The interposition of a flexible intermediate conductor between a more rigid main conductor and the connector makes it easier to fit the connector and reduces the transmission of vibration to the overmolded sleeve tube. The connection of the main conductor to the intermediate conductor may be achieved by any known means but preferably also by the process of aluminothermal melting in a crucible.

To the accomplishment of the foregoing and related ends the invention, then, comprises the features hereinafter fully described and particularly pointed out in the claims, the following description and the annexed drawings setting forth in detail certain illustrative embodiments of the invention, these being indicative, however, of but a few of the various ways in which the principles of the invention may be employed.

### BRIEF DESCRIPTION OF THE DRAWINGS

Figure 1 is a fragmentary view from the side, in transverse section, showing a preferred embodiment of the electrical connector;
Figure 2 is an enlarged axial section of the dowel pin body;
Figure 3 is an enlarged side elevation of the tapered threaded stud for expanding the dowel pin body; and
Figure 4 is a fragmentary side elevation partially in section of the connector assembled but before insertion into the rail and tightening.

### DETAILED DESCRIPTION OF THE PREFERRED EMBODIMENTS

In the drawing, the numerical reference 2 denotes the web of a rail through which a cylindrical bore 3 passes, while the alphabetic reference A denotes, in general, the body of the fastening dowel pin and the reference B denotes the axial tapered threaded stud interacting with the dowel pin.

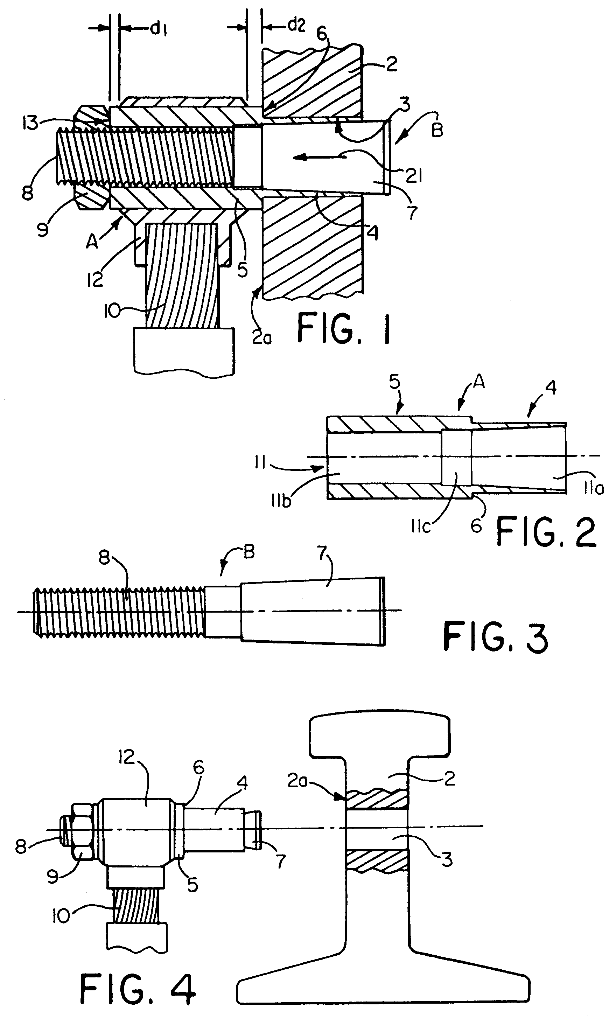

As shown in more detail in Figure 2, the dowel pin body A has a tubular overall shape, a part 4 of which has a reduced outside diameter allowing it to be enlarged with a slight amount of friction in the bore 3 of the web 2. Another part 5 of the dowel pin has a larger diameter than the part 4, and forms the connector body. The part 5 is separated from the part 5 by a shoulder 6 designed to bear on the face 2a of the web 2.

The axial bore 11 passing through the dowel pin body A, as shown in Figure 2, has a frustoconical end 11a having a taper which favors subsequent wedging of the components. This portion of the bore may have a vertex angle of 4°, for example, and extends over a length equal to that of the smaller outside diameter cylindrical part 4.

The bore has a cylindrical end part 11b having a sufficient diameter to allow the threaded end of the stud B to pass through with clearance. The bore also has an intermediate cylindrical part 11c having a diameter equal to that of the smallest diameter of the frustoconical part 11a, but greater than that of the part 11b.

The threaded stud B shown in Figure 3 includes a tapered head 7 whose diameter, taper and length are matched to those of the bore tapered section 11a and a threaded rod 8, designed to pass, with clearance, through the dowel pin body A to receive a nut 9.

As Figure 1 shows, the conductor 10, may consist of a jacketed cable with a stripped end which is joined to the dowel pin body A by a sleeve tube 12 enveloping the conductor stripped end and the enlarged part 5 of the body A. The overmolded sleeve tube 12 is preferably formed by cast welding and may be formed under factory conditions by means of a metal alloy compatible with the materials of which the conductor 10 and the dowel pin body 5 are made. Although the process may be conducted in the field, it is easier to form the assembly under factory conditions. The cast welding may be achieved by exothermic or aluminothermic materials ignited in a crucible to form the molten metal which is used to form the sleeve tube and also form a good low impedance electrical connection between the conductor end and the dowel pin body. Molds and materials for forming and casting such alloys are available from Erico Europa Ltd. under the well known trademark CADWELD®.

It is noted that the sleeve tube 12 does not extend over the entire length of the body 5. Indeed, as Figure 1 shows, it is separated from the face 13 on which the nut 9 bears by a distance d1 protecting it against any contact with the nut or tool used to tighten the nut, and thus the transmission of torsional forces when this nut is being tightened, and by a distance d2 from the shoulder 6 which bears against the web 2 of the rail.

Referring now to Figure 4, the whole connector thus constructed forms an assembly. The components are joined together and cannot become separated during storage or transport, and are ready for use. In Figure 4, the parts are assembled but not fully tightened.

In order to provide connection to the rail, it is sufficient to engage the part 4 of the dowel pin body in the bore 3 of the rail. As soon as this insertion operation has been completed, the nut 9 is tightened using a wrench, so as to draw the stud 7 in the direction of the arrow 21 seen in Figure 1, forcing the taper 7 into the bore 11 of the dowel pin in order to expand its internally tapered end radially in the bore 3. When tightened, the nut not only expands the dowel pin but also clamps the dowel pin against the rail.

In order to avoid deformation of the rail or breakage of the threaded rod 8 by exerting too high a tensile force, this tightening is preferably effected by means of a torque wrench. Torque limits may be achieved by the settings on a pneumatic impact wrench. It will also be appreciated that wrench extensions may be employed and that the conductor 10 need not always be perpendicular to the axis of the dowel pin and stud.

By virtue of the length of the frustoconical bore 11a, and also of the intermediate cylindrical bore 11c, radial expansion of the non-split cylindrical part 4 of the dowel pin takes place over its entire length, and this length alone. This ensures that this expansion is even and that this is the only mechanical contact in the electrical connection between the conductor 10 and the rail 2.

When the connector is put in place, all the elements contributing to the electrical connection, other than fastening to the rails, are protected against adverse weather conditions and against oxidation, which ensures a reliable connection.

The product actually sold may be a length of conductor 10 with connector assemblies on both ends. However, in some situations, the product may be a relatively short length of flexible or rigid cable, with the connector on one end only.

When the rigidity of the main conductor may impede the fitting of the connector, the overmolded sleeve tube 12 joins an intermediate, flexible or rigid, length of cable. This makes it possible to supply the worksites with assemblies which are ready to fit, and which, after fastening to the rails, are themselves connected to rigid or other conductors, for example by aluminothermal welding in a graphite crucible. This arrangement prevents forces resulting from the flexing of a rigid cable from disturbing the contacts between the connector and the track and makes it possible to separate the connection to the rails phase from the production of other electrical connections, it being possible for the latter to be effected by different personnel. Furthermore, this protects the connection from vibration transmitted through the ground from a more rigid main conductor.

It is believe apparent that the invention makes it possible, not only to join the conductor and the connector mechanically and electrically under optimal conditions but also, through its specific positioning, to use the tightening force of the nut to expand the dowel pin. This dispenses with any recourse to complicated and costly tooling for effecting this expansion or effecting the electrical connection with the dowel pin. Moreover, this invention reduces the fitting time and improves the reliability of the connection.

It is also apparent that the invention described in the application to the fastening of conductors against the rails of railroad tracks, can be applied to any other structures in order to provide a quick low impedance electrical connection.

Although the invention has been shown and described with respect to certain preferred embodiments, it is obvious that equivalent alterations and modifications will occur to others skilled in the art upon the reading and understanding of this specification. The present invention includes all such equivalent alterations and modifications, and is limited only by the scope of the claims.

## Claims

1. An electrical connector comprising a dowel pin tubular body having an internally tapered end of smaller outside diameter, and an externally enlarged end with an external shoulder between said ends, a tapered threaded stud adapted to fit through said tubular body with an externally tapered end, said stud including a threaded end projecting beyond the enlarged end of the dowel pin whereby the stud may be drawn axially to expand the internally tapered end of the dowel pin, and a cast sleeve surrounding the enlarged end of the dowel pin and the end of a conductor to provide good electrical connection therebetween whereby the conductor may be electrically connected to a structure by inserting the smaller end of the dowel pin in a bore of the structure and drawing the stud to expand the dowel pin in the bore.

2. A connector as set forth in claim 1 wherein said cast sleeve is spaced from the enlarged end of the dowel pin and also said external shoulder.

3. A connector as set forth in claim 1 including a nut on the projecting end of the stud bearing against the enlarged end of the dowel pin to draw the stud when tightened.

4. A connector as set forth in claim 1 wherein the internal taper of the dowel pin, and the external taper of the stud match as to length and taper angle.

5. A connector as set forth in claim 1 wherein said cast sleeve is formed by exothermic welding forming a good low impedance electrical connection between the dowel pin and conductor.

6. A connector as set forth in claim 1 including an electrical connection as described at both ends of the conductor.

7. A connector as set forth in claim 1 wherein said conductor is an intermediate conductor adapted to be connected to another main conductor.

8. A connector as set forth in any preceding claim wherein said cast sleeve is formed by an exothermic reaction in a crucible.

9. A connector as set forth in any preceding claim including a rail as said structure, said bore being in the web of said rail.

10. A method of forming an electrical connection to a structure comprising the step of cast welding a conductor to a hollow dowel pin to connect the conductor to the dowel pin with a tubular cast sleeve, said dowel pin including an expansion end projecting from the cast sleeve whereby the expansion end of the dowel pin may be inserted in the bore of the structure and expanded to connect the conductor to the rail.

11. A method as set forth in claim 10 wherein said cast welding forms a tubular sleeve surrounding said dowel pin.

12. A method as set forth in claim 11 wherein said dowel pin includes a stop shoulder defining a reduced diameter expansion end adapted to be inserted in the bore of the structure, and spacing the cast sleeve from said stop shoulder.

13. A method as set forth in claim 12 wherein said dowel pin includes a projecting end opposite the expansion end, and spacing said cast sleeve from said projecting end.

14. A method as set forth in claim 13 including drawing a tapered stud to expand said expansion end and using said projecting end of said dowel pin as a bearing surface to draw said tapered stud.

15. A method as set forth in claim 11 wherein said cast welding is formed by an exothermic reaction in a crucible.
